# EUROPEAN PATENT SPECIFICATION

(11) **EP 2 990 388 B1**
(45) Date of publication and mention of the grant of the patent: **30.01.2019**
(21) Application number: 14182328.6
(22) Date of filing: 26.08.2014
(51) Int. Cl.: C03B 33/03, C03B 33/10, C03B 33/027, C03B 33/037

(54) **Cutting device for a cutting table**
Schneidevorrichtung zur Verwendung in einem Schneidtisch
Dispositif de coupe à utiliser dans un table de coupe

(43) Date of publication of application: 02.03.2016
(73) Proprietor: Mecánicas Teruel S.L., 44415 Rubielos de Mora Teruel (ES)
(72) Inventor: Martín, Miguel Tomás, 44415 Rubielos De Mora, Teruel (ES)
(74) Representative: Nederlandsch Octrooibureau

(56) References cited:
- EP-A1- 1 475 357
- EP-A1- 1 800 820
- EP-A1- 2 153 962
- EP-A2- 0 328 491
- WO-A1-2011/051335
- CN-A- 103 241 934
- ES-A1- 2 299 404
- GB-A- 2 141 424
- JP-A- 2001 106 541
- US-A- 2 184 126
- US-A- 2 556 757
- US-A- 4 098 155
- US-A- 4 210 052
- US-A- 4 427 142
- US-A- 6 138 546
- US-A1- 2006 255 083

## Description

### Field of the invention

The present invention relates to a cutting of a cutting table for cutting a glass panel, according to claim 1. Moreover, the invention concerns to a cutting table comprising the cutting device for cutting glass panels. The present invention also relates to a method for cutting a glass panel using the cutting table.

### Background of the invention

From the current state of the art, automatic milling machines, automatic lathes, et cetera are known with heads capable of automatically changing the tool to be used, using a standardized system of cutting wheels.

When the cutting members need to be changed, the whole cutting table has to be put on hold while one of the head is moved away from the cutting surface in order to replace the cutting tool by an appropriate cutting tool. This procedure can take up to several hours, having such consequences as lost production time or at least increasing production time of the final, cut glass panel.

From ES 2299404, a multi-cutting head is known, comprising a compact unit having a motor connected to a planetary gearing mechanism, which is connected to each of a plurality of cutting heads. The cutting heads are arranged in a connected manner, such that the cutting heads are configured for rotating simultaneously when being driven by the motor. The cutting heads are also configured to move along an axis (usually a vertical axis) perpendicular to a cutting plane comprising the cutting direction. Of course, each of the cutting heads can be moved individually in the cutting plane and in the cutting direction, such that a cut on the glass panel can be performed.

A disadvantage of using this type of multi-cutting head is that the user still needs to perform some manual operations before and after performing the cut. Such operations are time consuming, at the same time compromising the accuracy of the cut that needs to be performed to the glass panel. Additionally, the prior art cutting tools do not disclose any security measure against glass splinters flying around during the cutting of the glass, possibly harming the user or operator.

Additionally, known solutions also involve a considerable amount of downtime, while failing to provide a high degree of security, particularly in terms of ensuring the safety of the user or operator and at the same time providing a consistent quality of the finished product. That is to say, some of the above-mentioned solutions involve unnecessary steps and precautions when cutting glass panels, while extending the cutting operations resulting in various errors. These are particularly noticeable at the cutting stage, the success of which depends on the used tools and the precision of said tools.

It is an object of the present invention to provide a cutting device for cutting and easing the separation of glass panels, which can overcome at least one of the above-mentioned drawbacks.

### Summary of the invention

To this end, the cutting device according to the present invention is according to claim 1. A security wheel is rotatably connected to the cutting means and provided adjacent to the cutting member, the security wheel being rotatable around a wheel rotation axis perpendicular to the cutting direction and parallel to the top surface, wherein the cutting member and the security wheel are arranged in such a way that lower ends of the security wheel and the cutting member can simultaneously contact the top surface upon movement of the cutting means to the top surface, wherein, when creating the cut in the cutting direction, the security wheel moves over the top surface, such as by rolling, in the cutting direction.

In this manner, the total time employed for cutting the glass panel is substantially minimized, while the safety of the user or operator is not at all compromised. Furthermore, the security provides improved support of the cutting means on the glass panel during cutting, thereby allowing the cutting of glass panels having a wide range of thicknesses, such as between 0.1-25 mm. Also, when the cut is performed, the security wheel can exert such a pressure on the glass panel when creating the cut, that a subsequent separation step, i.e. separation of two cut glass panel parts, is much easier. Additionally, by having a security wheel moving along with the cutting member over the top surface of the glass panel, glass splinters or glass chips created due to the cutting of the glass panel are kept within the confines of the cutting means by the shielding action of the security wheel.

It should be noted that the security wheel provides the possibility to block any possible disengagement of the cutting member during operation that could put in danger the integrity of the user or operator or any other person being in the surroundings of the cutting table during the cutting operations. Additionally, this sets a limiting travelling descending movement for the cutting member in the direction perpendicular to the cutting direction. This is set for avoiding the cutting member hitting the glass panel and therefore breaking it. When the cutting member hits a surface outside the top surface of the glass panel, such as the surface of the cutting table, the security wheel provides a dampening movement for the cutting member, making this dampening movement of the security wheel to the cutting wheel away from the glass panel in a direction perpendicular to a cutting direction or to a main cutting plane.

In an embodiment of the invention, the security wheel has an outer diameter of 10-60 mm. This diameter range allows the cutting of a wide range of glass panels, in particular glass panel thicknesses, at sufficient downward pressures.

Preferably, a pair of security wheels is provided at horizontally opposing sides of the cutting member and adjacent to the cutting member, the pair of security wheels being rotatable around the wheel rotation axis. The pair of security wheels provides stable support during the cutting action, and furthermore prevents glass splinters or chips from flying around at both sides of the cut. The horizontal distance between the pair of security wheels can be about 20-50 mm. Also, a high grade of accuracy is provided when performing the cut, because the security wheels can exert a predetermine pressure on both sides of the respective surface of the glass panel in such a way as to obtain a precise and clean linear scribing line. This makes the subsequent separation of the glass panels along the linear scribing line easier, because of the improved cut quality. Additionally, the time needed to perform subsequent operations, such as the separation of the glass panels, is substantially reduced.

In an embodiment of the invention, an outer circumference of the security wheel is provided with thermoplastic material or rubber-like material. By providing the security wheel with such materials at the outer circumference, the top surface of the glass panel is not damaged if the security wheel accidentally presses against this surface of the glass panel, with an unexpected pressure or force.

According to the invention, by having a first and a second cutting head mounted on the cutting device, the possibility of selecting the most appropriate cutting head to perform the cut, based on the thickness of the panel glass, is provided. Each of the cutting heads may comprise a cutting member having a different outer diameter, e.g. designed for cutting glass panels having a certain thickness. In this manner, the user or operator does not have to change the cutting member of the cutting head each time a glass panel is positioned on the support before being cut. This provides the possibility of having a simple and rapid way to automatically choose which one the cutting heads should be employed for cutting the class panel. Furthermore, there's no need to change or replace the cutting member in the cutting head.

In an embodiment of the invention, the number of cutting heads is 4 or more. This number of cutting heads proves to be an optimal amount for being able to cut the majority of glass panel thicknesses.

Moreover, the cutting device may comprise a panel positioning member arranged in such a way that it can contact the top surface of the glass panel and, if desired, move it around on the support surface of the cutting table when creating the cut in the cutting direction. Thus, the user or operator does not have position the panel on the support surface himself during cutting or pre-cutting operations. Also, performing cuts while the glass panel is being moved around by the panel positioning member is facilitated, saving a lot of time.

In an embodiment of the present invention, the cutting heads are configured for moving simultaneously in a rotational manner, around a vertical axis, when being driven by the driving means, and wherein each of the cutting heads can be moved individually along the axis perpendicular to the cutting direction, such that it can perform a linear scribing line on the glass panel.

Another aspect of the present invention relates to a cutting table for cutting a glass panel comprising:
- a support for supporting the glass panel in a horizontal way during cutting,
- a positioning bridge having a horizontally extending positioning portion arranged at a vertical distance from the top surface of the glass panel and the support, and
- a cutting device according to claim 1 wherein the positioning system of the cutting device is arranged on the horizontally extending positioning portion.

Moreover, the cutting table may further comprise a scanning means being provided adjacent to the cutting head on the positioning bridge. Advantageously, this provides the possibility for scanning the glass panel before performing any cut, allowing knowing the exact measurements of the glass panel at any time and more especially before cutting. In this manner, the result of the cutting action can be optimized, especially when the dimensions of the glass panel are reduced, or non-standard.

A further aspect of the present invention relates to a method for cutting a glass panel using a cutting table as the one described above, comprising the steps of:
a) positioning the glass panel on the support in a horizontal fashion, such that it extends in a horizontal plane, the glass panel having a thickness t, and a top and bottom surface, wherein the bottom surface is supported by a support surface of the support,
b) when seen in top view, moving the cutting head to a position outside of a circumferential edge of the glass panel,
c) using the actuating means to move the cutting head towards the support surface along the actuation axis over a first actuation distance until the cutting means or the security wheel contact the support surface in a first contact position along the actuation axis,
d) storing the first contact position in a memory,
e) using the actuating means to move the cutting head away from the support surface along the actuation axis,
f) when seen in top view, moving the cutting head to a position over the glass panel,
g) using the actuating means to move the cutting head towards the top surface along the actuation axis over a second actuation distance until the cutting means or the security wheel contact the top surface in a second contact position along the actuation axis,
h) storing the second contact position in a memory,
i) calculating the thickness t of the glass panel by establishing the difference between the second contact position and the first contact position along the actuation axis.

This method provides a simple and time-efficient manner of measuring and/or verifying the thickness of the glass panel before performing any further operation. Additionally, this assists the user or operator with establishing which cutting head should be employed for the cutting operation. By performing each of the above-mentioned method steps, the cutting of the glass panel can be done without the need of adapting the cutting head and the cutting member each time a new glass panel is loaded onto the support surface. In this manner, a simple and time-efficient method of cutting glass panels is provided, the glass panels e.g. having a thickness of between 0.1-25 mm.

The method further comprises the steps of:
- using either the first or the second cutting head for performing the cut, wherein the selection of the first or the second cutting head is based on its respective suitability for performing a cut in a glass panel with the calculated thickness t.

Optionally, a table containing empirical data is provided for the selection of the most appropriate cutting head for the calculated thickness t. By using this method the efficiency of cutting operation is substantially increased.

### Brief description of the drawings

Further characteristics and advantages of the invention will become better apparent from the description of preferred embodiments of cutting heads for use in a cutting device of a cutting table for cutting a glass panel, illustrated by way of non-limiting example in the accompanying drawings, wherein:
Figure 1 is a perspective view of the cutting table according to the invention;
Figure 2 is a is a detailed view of the cutting means and the cutting head;
Figure 3 shows a perspective view of the cutting heads and the cutting means mounted thereon, according to the present invention;
Figure 4 is a front view of the cutting heads mounted thereon, according to the present invention;
Figure 5a is a transversal cross section of the top part of the cutting device and the cutting heads mounted thereto, of figure 4, along the line IV-IV; and
Figure 5b is a transversal cross section of the cutting device of Fig. 5a along line V-V.

### Detailed description of the invention

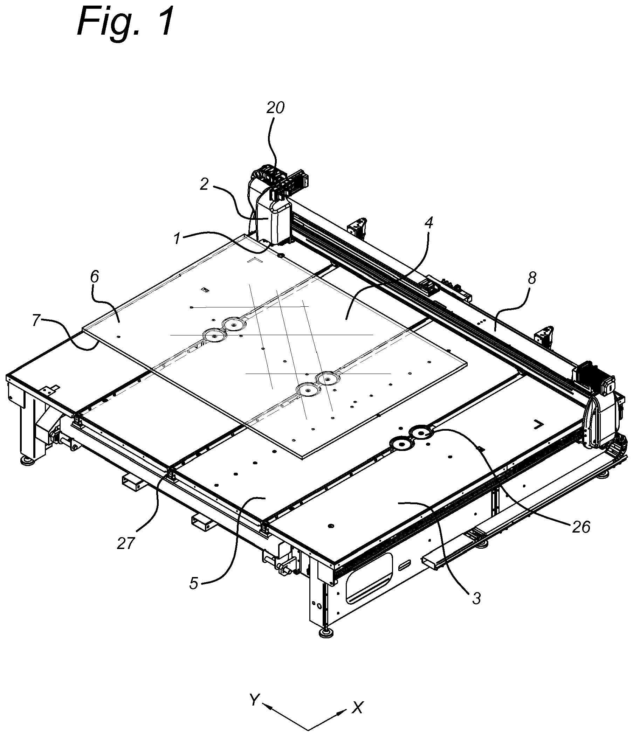

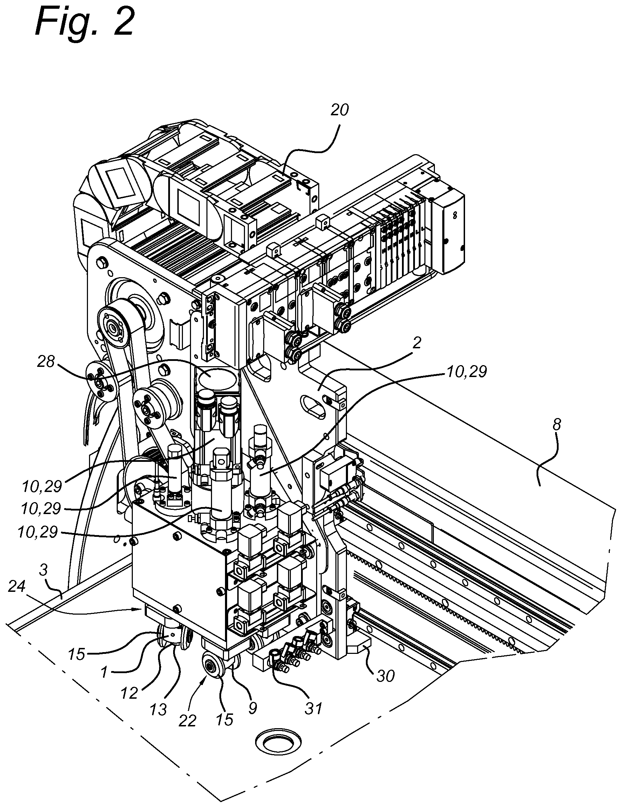

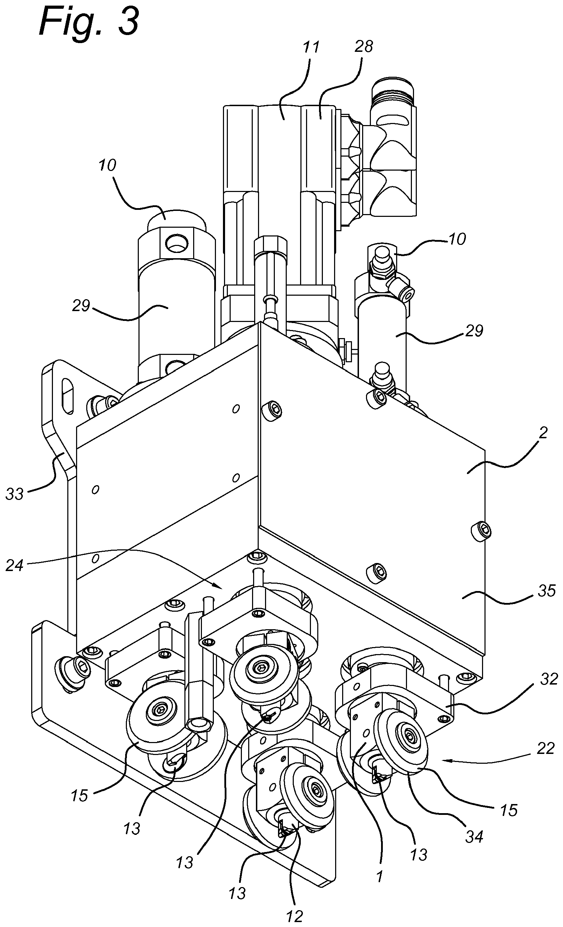

Figure 1 shows a glass panel 4 that is to be processed by a cutting head according to the present invention. The cutting head 1 is preferably specifically designed for cutting single glass panels. The cutting head 1, which can be best seen in figures 2 & 3, is mounted in a cutting device 2 and it is installed in a cutting table 3, which comprises a support surface 5 having a support surface 5 for supporting the glass panel 4 in a horizontal orientation as to be cut. The cutting table 3 comprises suction members 26 for positioning and/or holding the glass panel 4 in an automatic form. When the suction members 26 are not provided or activated, the glass panel 4 can be manually positioned on the support surface 5 of the cutting table 3. Moreover, the glass panel 4 comprises an upper and lower surface 6, 7, the lower surface 7 of the glass panel 4 being in contact with the support surface 5. The suction members 26 are installed along longitudinal openings 27 arranged in the support surface 5 of the cutting table 3. This allows the suction members 26 to retain the glass panel 4 on the support surface 5 when the cutting head 1 is performing the cut on the glass panel 4.

It should be noted that the suction members 26, embodied in the form of suction cups, are positioned at a parallel distance from longitudinal openings 27 along the horizontal orientation of the cutting table 3. The suction cups 26 are arranged at a distance from the longitudinal openings 27, and are configured to retain or assist movement, when required, of the glass panel 4 during operation. These suction cups 26 can be independently activated and can be positioned at a different distances from each other.

Moreover, the cutting table 3 comprises a positioning system 8, comprising a positioning bridge 8, having a horizontally portion (i.e. extending in a direction perpendicular to the plane defined by the X- and Y-axes) arranged at a vertical distance from the support surface 5, and also from the top surface 6 of the glass panel 4, when the glass panel 4 is in a position for performing a cut. The positioning bridge 8 comprises a number of cutting heads 1 mounted on the cutting device 2, which is moveable along the positioning bridge 8. It should be noted that the number of cutting heads 1 can for instance amount to four.

As can be seen more clearly in figure 2, the cutting device 2 comprises a plurality of cutting heads 1 arranged on the positioning bridge 8. The cutting heads 1 comprise a number of cutting means 12, each comprising a cutting member 14. It can be best appreciated in figure 3 that the cutting members 13 have a different diameter to be able to cut glass panels 4 having different thicknesses, such that the appropriate cutting member 14 can be selected before performing the cut of the glass panel 4, depending on the glass panel 4 thickness. Moreover, the cutting heads 1 are positioned at a vertical distance from the upper and lower surface 6, 7 of the glass panel 4 as to be able to perform a cut on the upper surface 6 of the glass panel 4. The cutting device 2 as illustrated comprises a number of actuating means 10, such as pistons or air cylinders 29, which are connected to each of the cutting heads 1 for actuating and moving these in a vertical direction. Furthermore, a central actuating means 10, embodied as a central driving motor 28 is positioned at a concentric position with respect to the pistons or air cylinders 29, for providing rotational movement to each of the cutting heads 1 around a vertical axis. It should be noted that the pistons or air cylinders 29 employed in the current invention comprise a number of features such as an adjustable stroke cylinder, a temperature monitoring system via a KTY thermal sensor and an auto switch sensor for optimizing the working life of each of the pistons or air cylinders 29. The proof pressure of the pistons or air cylinders 29 is about 1.5 MPa, while the operating pressure is about 0.13-1 MPa, providing a better wear resistance and high volumetric efficiency. Furthermore, the speed of operation of the pistons or air cylinders 29 is about 50-1500 mm/s, making the operation of the cutting heads 1 substantially effective, while the security and integrity of the glass panel is not being compromised.

Additionally, the cutting device 2 may comprise a number of features such as guiding means 30 for allowing guiding and movement of the cutting device 2 along the positioning bridge 8, and a number of lubricant units 31 for lubricating the cutting heads 1 individually in order to adapt each of the cutting heads 1 to the type and characteristics of the glass panel 4 to be cut.

Figure 3 shows a perspective view of the cutting device 2, wherein the cutting heads 1 along with an arrangement of cutting members 13 can be seen. The cutting members 13, embodied as cutting wheels, are implemented in the cutting heads 1. The cutting device 2 is provided with a central driving motor 28 for providing rotational movement of the cutting heads 1 and consequently, of the cutting wheels 13 with respect to the vertical axis of the cutting device 2. Moreover, the cutting heads 1 comprise cutting wheels 13 having different dimensions, such as having different outer diameters or widths, as to provide the possibility to perform a cut on glass panels 4 of different thicknesses. The differences in diameter of the cutting wheels 13 are provided to adapt the cut of be performed to different glass panels 4, having different characteristics. It should be noted that the cutting wheels 13 are rotatable in a free or driven manner about an axis perpendicular to the cutting direction and parallel to a main plane of the glass panel 4. The cutting wheels 13 can be chosen depending on the characteristics of the glass panels 4 to be cut, but it should be noted that the outer diameter of the cutting wheels 13 preferably should be about 6-20mm, which will allow performing a cut of glass panels 4 having a total thickness of about 0.1-25 mm. For thicknesses of glass panels such as 25 mm, the cutting heads 1 could have a cutting wheel 13 having an outer diameter of about 12 mm, while the diameter of the piston or air cylinder 29 should be about 40 mm, providing this a high quality cut, when compared with cutting devices using a piston or air cylinder 29 of lower diameter.

Additionally, the diameter of the pistons or air cylinders 29 used in the present invention will be of about 16, 20, 25 32 or 40 mm bore size, providing for example the pistons or air cylinders 29 of 16 mm the torque for cutting glass panels of about 15 mm, by using a cutting wheel 13 having an outer diameter of 6mm or higher. However, when a glass panel having a thickness of about 25 mm is to be cut, the diameter of the pistons or air cylinders 29 used should be about 40mm, while the cutting wheel 13 employed should have an outer diameter of at least 12mm.

As can best seen in this figure 3, a pair of security wheels 15 are provided on the cutting heads 1 positioned at both sides of the cutting wheels 13. Each of the security wheels 15 is rotatably connected to a main body of the cutting head 1, which is connected to a main body of the cutting device 2 by means of a supporting element 32. Moreover, the security wheels 15 comprise an outer diameter having a flat surface 34 that have a total thickness of about 3-5 mm. This flat surface 34 can be made of the same material of the security wheel 15, or comprises a thermoplastic material or rubber-like material or any other type of suitable for exerting a controlled pressure on the glass panel surfaces 6, 7 without damaging the surface of the glass panel 4. Additionally, the security wheels 15 will provide a blocking barrier to the spindle created when the cut is performed on the glass panel 4, protecting the user or operator from any particle that can be expelled from the area where the cut is being performed. It should be noted that when the security wheels 15 are in contact with the top surface 6 of the glass panel 4, the pressure that these security wheels 15 exert on the glass panel 4 can be adjusted, easing the separation of the glass panels 4 after the cut has been performed.

As seen in figure 3, the central driving motor 28 is positioned on top of the central body of the cutting device 2, while the pistons or air cylinders 29 are located concentrically aligned with respect to the vertical axis of the cutting heads 1, in order to provide axial movement to each of the cutting heads 1 to which they are connected. Moreover, a mounting element 33 is provided for connecting the cutting device 2 to the positioning bridge 8. By having the mounting element being a separate element, not being part of the cutting device 2, an easy mounting and demounting of the cutting device 2 can be done without compromising the integrity of any of the parts of the mentioned device 2. Additionally, it can be seen that a cover plate 35 is positioned on the front part of the cutting device 2, connected by means of screws. This cover plate 35 can be removed for performing any kind of operation in the cutting device 2 without the need to demount the entire cutting device 2.

Additionally, the cutting device 2 can comprise a suction member (not illustrated) in the form of a suction pad or the like, which could cooperate with the suction members 26 situated in the longitudinal openings 27 along the support surface 5 of the cutting table 3, for holding the glass panel 4 during the cut or just to be able to move the glass panel 4 from one location to a different location, including rotational movement, within the support surface 5 of the cutting table 3.

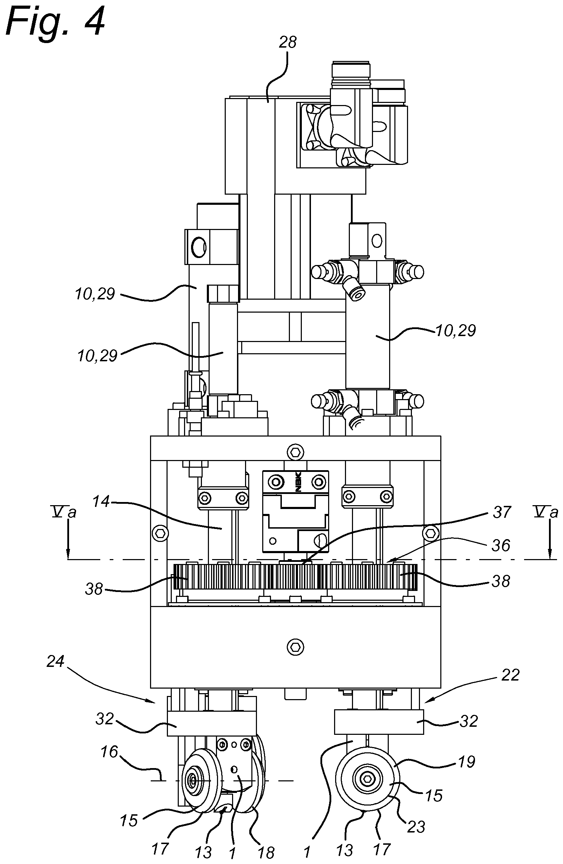

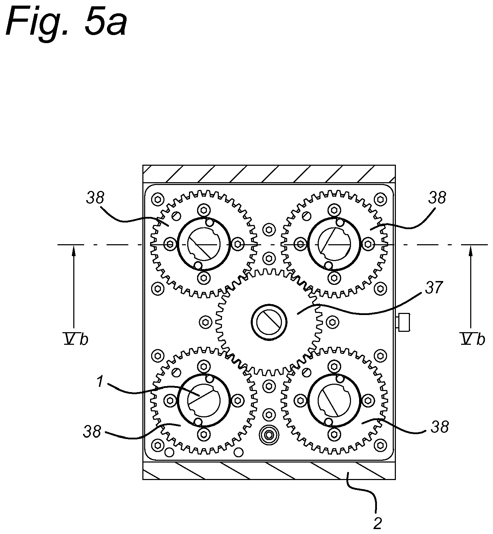

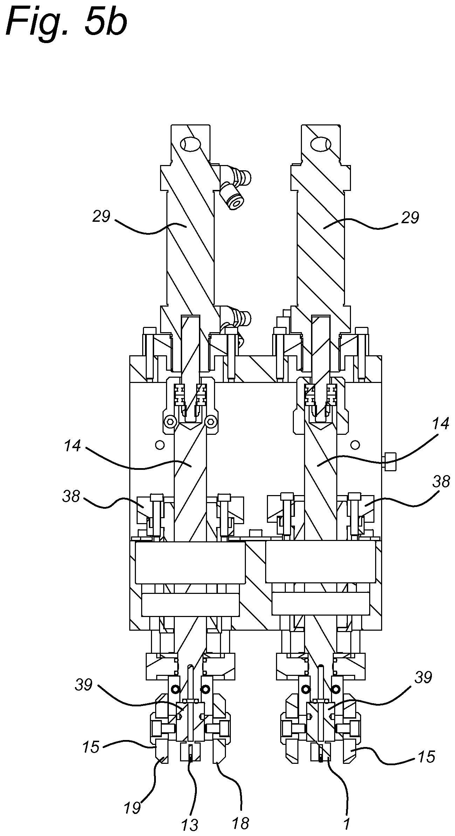

Figure 4 shows a front view of the cutting device 2 wherein the cover plate 35 has been removed from its position as shown in figure 3. As can be appreciated, the central driving motor 28 is connected to a main gearing wheel or sun gear 37 being part of a planetary gearing system 36, which can be best seen in figures 5a & 5b. Additionally, the planetary gearing system 36 comprises a number of planet gears 38 revolving about the main gearing wheel or sun gear 37. The illustrated embodiment comprises a total of four planet gears 39, each of these planet gears 38 being connected to their respective cutting head 1. By activating the central driving motor 28, this will rotate the main gearing wheel or sun gear 37, which will make the planet gears 38 rotate evenly as to make the cutting heads 1 rotate. It should be noted that the pistons or air cylinders 29 can operate the cutting heads 1 simultaneously which each of the planet gears 38 rotate, providing the possibility to move the cutting wheels 13 downwards and/or upwards, while they rotate all at once.

It should be noted that each of the cutting heads 1 as here embodied may comprise a thickness detection system (not illustrated) for enabling each of the cutting heads 1 detecting the thickness of the glass panel 4 before the cutting operation is performed. In use, the thickness detection system will use an analogue sensor installed in each of the pistons or air cylinders 29. The thickness detection system will send the information measured to a central unit or computer. Additionally, the pistons or air cylinders 29 may comprise a video camera or any other means for controlling and measuring the operations performed by the cutting heads 1.

Figures 5a and 5b illustrate cross-sectional views of the cutting device 2 according to the present invention. As best seen in figure 5a the planetary gear system 36 is provided within the cutting device 2 just above the cutting heads 1. The central driving motor 28 is located above the vertical axis of the sun gear 37, driving this sun gear 37 that will provide movement to the planet gears 38 that rotate the cutting heads 1. By having such a planetary gearing configuration, the total volume needed for a system as the one shown is reduced, providing a compact structure that can be easily moved along the positioning bridge 8 without the need of a motor with high torque.

Moreover, in figure 5a it can be seen that when the sun gear 37 is activated and moved by the action of the central driving motor 28 either clock wise or counter clock-wise, the planet gears 38 will be moved in the same direction causing the rotation of the cutting heads 1 to move accordingly.

Figure 5b illustrates a transversal cross section of the cutting heads of figure 5a along line V-V, wherein it can be seen that each of the cutting heads 1 is connected to each of the pistons for providing vertical movement along the vertical axis of the cutting device 2 of each of the cutting heads 1 individually, before, during and after performing the cut of the glass panels 4. The cutting heads 1 as illustrated comprise a holding member 39 to which the security wheels 15 are connected, and that can provide a small buffer action for avoiding damaging the glass panel 4 during operation. Moreover, as can be appreciated from this figure, the lower part of the flat surface 34 of the outer diameter of the security wheels 15 is at least at the same horizontal position as the lower end of the cutting member 13. It should be noted that the connections between each of the pistons 29 and the rest of the parts of the cutting heads are provided with bearings and with dampening elements for assisting the rotational movement of the cutting heads 1, while providing a silent operation of the entire cutting device 2.

It should be understood that a skilled person will recognize the illustrated number of cutting heads 1 in the cutting device 2 is four, but it is not limited to this number. In other words, the number of cutting heads 1 that can be used in a cutting device 2 can be of 2, 3, 4, 5, 6, etc. depending on the needs of the operation.

The operation of the device according to the present invention will be explained here. During the operation of the cutting head 1, and more in detail of the cutting device 2 comprising at least a pair of cutting heads 1 when a glass panel 4 is to be cut, the glass panel 4 is positioned in a horizontal orientation on the support surface 5 of the cutting table 3 by the user or operator. Subsequently, the operator introduces the value of the thickness of the glass panel 4 in the computer that operates the cutting table 3. Please note that this step can be done before positioning the glass panel 4 on the support surface 5 of the cutting table 3. In any event, this step should be performed before starting with the cut of the glass panel 4. Right after, the glass panel 4 is held in a position by the suction members 26 located along longitudinal openings 27 arranged in the support surface 5 of the cutting table 4, said position being a location wherein at least part of the glass panel 4 is positioned under the positioning bridge 8.

The cutting device 2 is moved to a positioned wherein at least one of the cutting heads 1 is positioned above outside the circumferential edge of the glass panel 4 to be cut, and wherein one of the cutting heads 1 is moved downwards to a position adjacent to the edge of the glass panel 4 as to allow the cutting member 13 and/or the security wheel 15 to contact the support surface 5 of the cutting table 3. By doing this operation, the analogue sensor installed in each of the pistons 29 can register a first measurement. This measurement is stored in a memory of the computer of the cutting table 3. Subsequently, the cutting device 2 is moved such that the same cutting head 1 employed in the previous operation is moved away from the support surface 5 and into a position over the glass panel 4. The cutting head 1 is moved downwards as to allow the cutting member 13 and/or the security wheel 15 to contact the top surface 6 of the glass panel 4. By doing this operation, the analogue sensor installed in each of the pistons 29 can register a second measurement. This measurement is stored in a memory of the computer of the cutting table 3. Now the computer can check the difference between both measurements and calculate the thickness of the glass panel 4 before a cut is done. Also, by doing these operations, it is checked whether the selected cutting head 1 is the most appropriate one for performing the cut, as it may have been previously pre-selected based on the predetermined value introduced manually into the computer by the user or operator.

Subsequently, the cutting wheel 13 is moved as to touch the top surface 6 of the glass panel 4. The cutting wheel 13 cuts the glass panel 4 as to make a linear scribing line along the glass panel top surface 6, which can extend at least partially throughout its thickness. It should be noted that when the cut is performed, the cutting wheel 13 can be moved in a perpendicular direction with respect to the linear direction of the longitudinal openings 27. In this manner, contour cuts can be achieved.

It should be noted that while performing the cut on the glass panel 4, the security wheels 15 can be in contact with the glass panel 4 at a relatively small distance from the linear scribing line, such that the security wheels 15 exert a controlled pressure onto the glass panel 4 in a continuous manner. In this manner, the security wheels 15 roll over the top surface 6 of the glass panel 4, making the later operation of separating the resulting glass panels easier than if the cut was simply done without the use of the security wheels 15.

After the cutting, the glass panel 4 is moved by the operator for separating the resulting glass panels in a clean manner, without the cutting edges of the glass panel 4 being ruined or damaged by a heavy mechanical operation, such a hammer hit.

The cut parts can be cut into smaller panels if required, by repeating the above-described process. In the present invention, the cutting wheels 13 are arranged on the positioning bridge 8, over the top surface 6 of the glass panel 4, being driven in a free rotation manner about their vertical axis, while the security wheels 15 are also provided above the top surface 6 of the glass panel 4.

It should be noted that when the measured different values between the support surface 5 of the cutting table 3 and the top surface 6 of the glass panel 4 as measured by the signals registered by the analogue sensor installed in each of the pistons 29 is different than the predetermined value introduced manually into the computer by the operator, the computer will display a message alerting the operator about this mismatch of values, giving the opportunity to the operator to take any further action before performing the cut of the glass panel 4.

Additionally, the cutting device 2 may comprise a photocell (not illustrated) implementing a scanner (not illustrated) for assisting the cutting heads 1 in the cutting process. In this manner, the computer can store a number of predetermined cutting patterns for cutting the glass panel 4. Moreover, the photocell can be also used for detecting the presence of the glass panel 4. In operation, the photocell will be implemented in the positioning bridge 8 and being connected to the cutting device 2. When the cutting device 2 moves over the glass panel 4 and detects the predetermined pattern, the photocell and therefore the cutting device 2 move along a contour line of the predetermined pattern following reading and non-reading cycles. This means that when the photocell moves in a direction wherein it does not detect any predetermined pattern, that could have a form of a line, it will move in a opposite direction in order to try to find the predetermined pattern. This operation can be repeated until the entire predetermined pattern has been recognized.

Thus, the invention has been described by reference to the embodiments discussed above.

### Reference numerals

- 1.: Cutting head
- 2.: Cutting device
- 3.: Cutting table
- 4.: Glass panel
- 5.: Support surface of the cutting table
- 6.: Top surface of the glass panel
- 7.: Bottom surface of the glass panel
- 8.: Positioning system / Positioning bridge
- 9.: Lower end of the cutting device
- 10.: Actuating means
- 11.: Actuation axis
- 12.: Cutting means
- 13.: Cutting member
- 14.: Driving means
- 15.: Security wheel
- 16.: Wheel rotation axis
- 17.: Lower end of the security wheel
- 18.: Second security wheel
- 19.: Outer circumference of the security wheel
- 20.: -
- 21.: -
- 22.: First cutting head
- 23.: First outer diameter
- 24.: Second cutting head
- 25.: -
- 26.: Suction member
- 27.: Longitudinal opening
- 28.: Central driving motor
- 29.: Piston or air cylinder
- 30.: Guiding means
- 31.: Lubricant unit
- 32.: Supporting element of the cutting head
- 33.: Mounting element
- 34.: Flat surface of the outer diameter of the security wheel
- 35.: Cover plate of the cutting device
- 36.: Planetary gear system
- 37.: Main gearing wheel or sun gear
- 38.: Planet gear
- 39.: Holding member

## Claims

1. Cutting device (2) for a cutting table (3) for cutting a glass panel (4), the cutting table comprises a support (5) for supporting the glass panel during cutting in a horizontal fashion, such that it extends in a horizontal plane, wherein the panel has a top surface (6) and a bottom surface (7), wherein the bottom surface is supported by the support, wherein the cutting device comprises a first cutting head and a second cutting head, a positioning system (8) allowing the cutting device to be moved over the top surface (6) for allowing the cutting of the top surface in a cutting direction by the first or the second cutting head, the first and the second cutting heads being provided at a lower end (9) of the cutting device, wherein the cutting device comprises actuating means (10) for moving the first and/or the second cutting head to and from the top surface of the panel along an actuation axis (11),
wherein the first cutting head is provided with first cutting means with a first cutting member for creating a first type of cut and a first security wheel having a first outer diameter and a
the second cutting head is provided with second cutting means with a second cutting member for creating a second type of cut and a second security wheel having a second outer diameter,
wherein the first type of cut is different from the second type of cut, the first cutting member has a different outer diameter than the second cutting member and the first outer diameter is different from the second outer diameter such that the first cutting head and/or the second cutting head can be selected based on a thickness of the glass panel;
wherein the first and the second cutting means are rotatable about a rotational axis perpendicular to the top surface by driving means (14) comprised by the cutting device (2),
the first and the second security wheels (15) are respectively rotatably connected to the first cutting means and the second cutting means and respectively provided adjacent to the first cutting member and the second cutting member, the first and the second security wheels being respectively rotatable around a first wheel rotation axis (16) and a second wheel rotation axis perpendicular to the cutting direction and parallel to the top surface, wherein the first and the second cutting members and the first and the second security wheels are arranged in such a way that lower ends (17) of the first security wheel and the first cutting member can simultaneously contact the top surface upon movement of the first cutting means to the top surface, wherein, when creating the cut in the cutting direction, the first security wheel moves over the top surface, such as by rolling, in the cutting direction and lower ends of the second security wheel and the second cutting member can simultaneously contact the top surface upon movement of the second cutting means to the top surface, wherein, when creating the cut in the cutting direction, the second security wheel moves over the top surface, such as by rolling, in the cutting direction.

2. Cutting device according to claim 1, wherein the first security wheel and/or the second security wheel has an outer diameter of 10-50 mm.

3. Cutting device according to claim 1 or 2, wherein a pair of security wheels is provided at horizontally opposing sides of the first cutting member and/or the second cutting member and adjacent to the first cutting member and/or the second cutting member, the pair of security wheels being rotatable around the first wheel rotation axis and/or the second wheel rotation axis.

4. Cutting device according to claim 3, wherein the horizontal distance between the pair of security wheels is about 20-60 mm.

5. Cutting device according to any one of the preceding claims, wherein an outer circumference of the first security wheel and/or an outer circumference of the second security wheel are provided with thermoplastic material or rubber-like material.

6. Cutting device according to any one of the preceding claims, wherein the number of cutting heads is 4 or more.

7. Cutting device according to any one of the any one of the preceding claims, wherein the cutting device comprises a panel positioning member arranged in such a way that the panel positioning member can contact the top surface of the glass panel and move the glass panel around when creating the cut in the cutting direction.

8. Cutting table (3) for cutting a glass panel (4) comprising:
- a support (5) for supporting the glass panel (4) in a horizontal way during cutting,
- a positioning bridge (8) having a horizontally extending positioning portion arranged at a vertical distance from the top surface (6) of the glass panel and the support, and
- a cutting device (2) according to any one of the claims 1-8, wherein the positioning system (8) of the cutting device is arranged on the horizontally extending positioning portion.

9. Cutting table according to claim 8, wherein a scanning means is provided adjacent to the cutting head on the positioning bridge (8).

10. Method for cutting a glass panel (4) using a cutting table (3) according to claim 8 or 9, comprising the steps of:
a) positioning the glass panel on the support (5) in a horizontal fashion, such that it extends in a horizontal plane, the glass panel having a thickness t, and a top (6) and bottom (7) surface, wherein the bottom surface is supported by a support surface of the support,
b) when seen in top view, moving the cutting head (1) to a position outside of a circumferential edge of the glass panel,
c) using the actuating means (10) to move the cutting head towards the support surface along the actuation axis over a first actuation distance until the cutting means (12) or the security wheel (15) contact the support surface in a first contact position along the actuation axis (11),
d) storing the first contact position in a memory,
e) using the actuating means (10) to move the cutting head away from the support surface along the actuation axis,
f) when seen in top view, moving the cutting head to a position over the glass panel,
g) using the actuating means (10) to move the cutting head towards the top surface along the actuation axis over a second actuation distance until the cutting means or the security wheel contact the top surface in a second contact position along the actuation axis,
h) storing the second contact position in a memory,
i) calculating the thickness t of the glass panel by establishing the difference between the second contact position and the first contact position along the actuation axis.

11. Method according to claim 10, comprising the steps of:
- using either the first or the second cutting head for performing the cut, wherein the selection of the first or the second cutting head is based on its respective suitability for performing a cut in a glass panel with the calculated thickness t.

12. Method according to claim 11, wherein a table containing empirical data is provided for the selection of the most appropriate cutting head for the calculated thickness t.

## Patentansprüche

1. Schneidvorrichtung (2) für einen Schneidtisch (3) zum Schneiden einer Glasplatte (4), wobei der Schneidtisch einen Träger (5) zum Tragen der Glasplatte während des Schneidens in einer horizontalen Weise aufweist, so dass sie sich in einer horizontalen Ebene erstreckt, wobei die Platte eine obere Oberfläche (6) und eine untere Oberfläche (7) hat, wobei die untere Oberfläche von dem Träger gehalten wird, wobei die Schneidvorrichtung aufweist: einen ersten Schneidkopf und einen zweiten Schneidkopf, ein Positionierungssystem (8), das zulässt, dass die Schneidvorrichtung über die obere Oberfläche (6) bewegt wird, um das Schneiden der oberen Oberfläche in einer Schneidrichtung durch den ersten oder den zweiten Schneidkopf zuzulassen, wobei die ersten und zweiten Schneidköpfe an einem unteren Ende (9) der Schneidvorrichtung bereitgestellt sind, wobei die Schneidvorrichtung Betätigungseinrichtungen (10) zum Bewegen des ersten und/oder des zweiten Schneidkopfs entlang einer Betätigungsachse (11) zu der oberen Oberfläche der Platte oder von dieser weg aufweist,
wobei der erste Schneidkopf mit ersten Schneideinrichtungen mit einem ersten Schneidelement zum Erzeugen einer ersten Art von Schnitt und einem ersten Sicherheitsrad mit einem ersten Außendurchmesser versehen ist,
wobei der zweite Schneidkopf mit zweiten Schneideinrichtungen mit einem zweiten Schneidelement zum Erzeugen einer zweiten Art von Schnitt und einem zweiten Sicherheitsrad mit einem zweiten Außendurchmesser versehen ist,
wobei die erste Art von Schnitt verschieden von der zweiten Art von Schnitt ist, wobei das erste Schneidelement einen anderen Außendurchmesser als das zweite Schneidelement hat, und wobei der erste Außendurchmesser verschieden von dem zweiten Außendurchmesser ist, so dass der erste Schneidkopf und/oder der zweite Schneidkopf basierend auf einer Dicke der Glasplatte ausgewählt werden können;
wobei die ersten und zweiten Schneideinrichtungen durch Antriebseinrichtungen (14), welche die Schneidvorrichtung (2) aufweist, um eine Drehachse senkrecht zu der oberen Oberfläche drehbar sind,
wobei die ersten und zweiten Sicherheitsräder (15) jeweils drehbar mit den ersten Schneideinrichtungen und den zweiten Schneideinrichtungen verbunden sind und jeweils angrenzend an das erste Schneidelement und das zweite Schneidelement bereitgestellt sind, wobei die ersten und zweiten Sicherheitsräder jeweils um eine erste Raddrehachse (16) und eine zweite Raddrehachse senkrecht zu der Schneidrichtung und parallel zu der oberen Oberfläche drehbar sind, wobei die ersten und zweiten Schneidelemente und die ersten und zweiten Sicherheitsräder in einer derartigen Weise angeordnet sind, dass untere Enden (17) des ersten Sicherheitsrads und des ersten Schneidelements bei einer Bewegung der ersten Schneideinrichtungen zu der oberen Oberfläche gleichzeitig die obere Oberfläche berühren können, wobei, das erste Sicherheitsrad, wenn der Schnitt in der Schneidrichtung erzeugt wird, sich etwa durch Rollen in der Schneidrichtung über die obere Oberfläche bewegt und untere Enden des zweiten Sicherheitsrads und des zweiten Schneidelements bei einer Bewegung der zweiten Schneideinrichtungen zu der oberen Oberfläche gleichzeitig die obere Oberfläche berühren können, wobei, das zweite Sicherheitsrad, wenn der Schnitt in der Schneidrichtung erzeugt wird, sich etwa durch Rollen in der Schneidrichtung über die obere Oberfläche bewegt.

2. Schneidvorrichtung nach Anspruch 1, wobei das erste Sicherheitsrad und/oder das zweite Sicherheitsrad einen Außendurchmesser von 10 - 50 mm hat/haben.

3. Schneidvorrichtung nach Anspruch 1 oder 2, wobei ein Paar von Sicherheitsrädern auf horizontal entgegengesetzten Seiten des ersten Schneidelements und/oder des zweiten Schneidelements und angrenzend zu dem ersten Schneidelement und/oder dem zweiten Schneidelement angeordnet ist, wobei das Paar von Sicherheitsrädern um die erste Raddrehachse und/oder die zweite Raddrehachse drehbar ist.

4. Schneidvorrichtung nach Anspruch 3, wobei der horizontale Abstand zwischen dem Paar von Sicherheitsrädern etwa 20 - 60 mm ist.

5. Schneidvorrichtung nach einem der vorhergehenden Ansprüche, wobei ein Außenumfang des ersten Sicherheitsrads und/oder ein Außenumfang des zweiten Sicherheitsrads mit thermoplastischem Material oder gummiartigem Material versehen sind.

6. Schneidvorrichtung nach einem der vorhergehenden Ansprüche, wobei die Anzahl von Schneidköpfen 4 oder mehr ist.

7. Schneidvorrichtung nach einem der vorhergehenden Ansprüche, wobei die Schneidvorrichtung ein Plattenpositionierungselement aufweist, das in einer derartigen Weise angeordnet ist, dass das Plattenpositionierungselement die obere Oberfläche der Glasplatte berühren kann und die Glasplatte herumbewegen kann, wenn der Schnitt in der Schnittrichtung erzeugt wird.

8. Schneidtisch (3) zum Schneiden einer Glasplatte (4), der aufweist:
- einen Träger (5) zum Tragen der Glasplatte (4) während des Schneidens in einer horizontalen Weise,
- eine Positionierungsbrücke (8) mit einem sich horizontal erstreckenden Positionierungsabschnitt, der in einem vertikalen Abstand von der oberen Oberfläche (6) der Glasplatte und des Trägers angeordnet ist, und
- eine Schneidvorrichtung (2) nach einem der Ansprüche 1 - 8, wobei das Positionierungssystem (8) der Schneidvorrichtung auf dem sich horizontal erstreckenden Positionierungsabschnitt angeordnet ist.

9. Schneidtisch nach Anspruch 8, wobei eine Abtasteinrichtung angrenzend an den Schneidkopf auf der Positionierungsbrücke (8) bereitgestellt ist.

10. Verfahren zum Schneiden einer Glasplatte (4) unter Verwendung eines Schneidtischs (3) nach Anspruch 8 oder 9, das die folgenden Schritte aufweist:
a) Positionieren der Glasplatte auf dem Träger (5) in einer horizontalen Weise, so dass sie sich in einer horizontalen Ebene erstreckt, wobei die Glasplatte eine Dicke t und eine obere (6) und untere (7) Oberfläche hat, wobei die untere Oberfläche von einer Trägeroberfläche des Trägers getragen wird,
b) Bewegen des Schneidkopfs (1) zu einer Position außerhalb eines Umfangsrands der Glasplatte in der Draufsicht gesehen,
c) Verwenden der Betätigungseinrichtungen (10), um den Schneidkopf entlang der Betätigungsachse über einen erste Betätigungsstrecke in Richtung der Trägeroberfläche zu bewegen, bis die Schneideinrichtungen (12) oder das Sicherheitsrad (15) die Trägeroberfläche in einer ersten Berührungsposition entlang der Betätigungsachse (11) berühren,
d) Speichern der ersten Berührungsposition in einem Speicher,
e) Verwenden der Betätigungseinrichtungen (10), um den Schneidkopf entlang der Betätigungsachse von der Trägeroberfläche weg zu bewegen,
f) Bewegen des Schneidkopfs zu einer Position über der Glasscheibe in der Draufsicht gesehen,
g) Verwenden der Betätigungseinrichtungen (10), um den Schneidkopf entlang der Betätigungsachse über eine zweite Betätigungsstrecke in Richtung der oberen Oberfläche zu bewegen, bis die Schneideinrichtungen oder das Sicherheitsrad die obere Oberfläche entlang der Betätigungsachse in einer zweiten Berührungsposition berühren,
h) Speichern der zweiten Kontaktposition in einem Speicher,
i) Berechnen der Dicke t der Glasplatte durch Feststellen der Differenz zwischen der zweiten Kontaktposition und der ersten Kontaktposition entlang der Betätigungsachse.

11. Verfahren nach Anspruch 10, das die folgenden Schritte aufweist:
- entweder Verwenden des ersten oder des zweiten Schneidkopfs, um den Schnitt durchzuführen, wobei die Auswahl des ersten oder des zweiten Schneidkopfs auf Basis seiner jeweiligen Eignung zum Durchführen eines Schnitts in einer Glasplatte mit der berechneten Dicke t erfolgt.

12. Verfahren nach Anspruch 11, wobei eine Tabelle, die empirische Daten enthält, für die Auswahl des geeignetsten Schnittkopfs für die berechnete Dicke t bereitgestellt wird.

## Revendications

1. Dispositif de coupe (2) destiné à une table de coupe (3) pour couper un panneau de verre (4), la table de coupe comprenant un support (5) destiné à supporter le panneau de verre pendant la coupe de manière horizontale, de sorte qu'il s'étend dans un plan horizontal, dans lequel le panneau possède une surface supérieure (6) et une surface inférieure (7), dans lequel la surface inférieure est supportée par le support, dans lequel le dispositif de coupe comprend une première tête de coupe et une deuxième tête de coupe, un système de positionnement (8) permettant au dispositif de coupe d'être déplacé sur la surface supérieure (6) pour permettre la coupe de la surface supérieure dans une direction de coupe au moyen de la première ou de la deuxième tête de coupe, les première et deuxième têtes de coupe étant prévues à une extrémité inférieure (9) du dispositif de coupe, dans lequel le dispositif de coupe comprend des moyens d'actionnement (10) destinés à déplacer la première et/ou la deuxième tête de coupe vers et depuis la surface supérieure du panneau le long d'un axe d'actionnement (11),
dans lequel la première tête de coupe est munie de premiers moyens de coupe pourvus d'un premier élément de coupe destiné à créer un premier type de coupe et d'une première roue de sécurité ayant un premier diamètre extérieur et
la deuxième tête de coupe est munie de deuxièmes moyens de coupe pourvus d'un deuxième élément de coupe destiné à créer un deuxième type de coupe et d'une deuxième roue de sécurité ayant un deuxième diamètre extérieur,
dans lequel le premier type de coupe est différent du deuxième type de coupe, le premier élément de coupe a un diamètre extérieur différent du deuxième élément de coupe et le premier diamètre extérieur est différent du deuxième diamètre extérieur de sorte que la première tête de coupe et/ou la deuxième tête de coupe peuvent être sélectionnées en fonction de l'épaisseur du panneau de verre ;
dans lequel les premier et deuxième moyens de coupe peuvent tourner autour d'un axe de rotation perpendiculaire à la surface supérieure à l'aide de moyens d'entraînement (14) compris par le dispositif de coupe (2),
les première et deuxième roues de sécurité (15) sont respectivement reliées de manière rotative aux premiers moyens de coupe et aux deuxièmes moyens de coupe et respectivement disposées de manière adjacente au premier élément de coupe et au deuxième élément de coupe, les première et deuxième roues de sécurité pouvant tourner respectivement autour d'un premier axe de rotation de roue (16) et d'un deuxième axe de rotation de roue perpendiculaires à la direction de coupe et parallèles à la surface supérieure, dans lequel les premier et deuxième éléments de coupe et les première et deuxième roues de sécurité sont disposés de manière que les extrémités inférieures (17) de la première roue de sécurité et du premier élément de coupe puissent être simultanément en contact avec la surface supérieure lors du déplacement des premiers moyens de coupe vers la surface supérieure, dans lequel, lors de la réalisation de la coupe dans la direction de coupe, la première roue de sécurité se déplace sur la surface supérieure, tel que par roulement, dans la direction de coupe et les extrémités inférieures de la deuxième roue de sécurité et du deuxième élément de coupe peuvent être simultanément en contact avec la surface supérieure lors du déplacement des deuxièmes moyens de coupe vers la surface supérieure, dans lequel, lors de la réalisation de la coupe dans la direction de coupe, la deuxième roue de sécurité se déplace sur la surface supérieure, tel que par roulement, dans la direction de coupe.

2. Dispositif de coupe selon la revendication 1, dans lequel la première roue de sécurité et/ou la deuxième roue de sécurité a un diamètre extérieur de 10 à 50 mm.

3. Dispositif de coupe selon la revendication 1 ou 2, dans lequel une paire de roues de sécurité est prévue sur des côtés horizontalement opposés du premier élément de coupe et/ou du deuxième élément de coupe et de manière adjacente au premier élément de coupe et/ou au deuxième élément de coupe, la paire de roues de sécurité pouvant tourner autour du premier axe de rotation de roue et/ou du deuxième axe de rotation de roue.

4. Dispositif de coupe selon la revendication 3, dans lequel la distance horizontale entre la paire de roues de sécurité est d'environ 20 à 60 mm.

5. Dispositif de coupe selon l'une quelconque des revendications précédentes, dans lequel une circonférence extérieure de la première roue de sécurité et/ou une circonférence extérieure de la deuxième roue de sécurité sont pourvues d'un matériau thermoplastique ou d'un matériau analogue au caoutchouc.

6. Dispositif de coupe selon l'une des revendications précédentes, dans lequel le nombre de têtes de coupe est de 4 ou plus.

7. Dispositif de coupe selon l'une quelconque des revendications précédentes, dans lequel le dispositif de coupe comprend un élément de positionnement de panneau agencé de manière que l'élément de positionnement de panneau puisse être en contact avec la surface supérieure du panneau de verre et déplacer le panneau de verre lors de la réalisation de la coupe dans la direction de coupe.

8. Table de coupe (3) destinée à couper un panneau de verre (4) comprenant :
- un support (5) destiné à supporter le panneau de verre (4) de manière horizontale pendant la coupe,
- un pont de positionnement (8) ayant une partie de positionnement s'étendant horizontalement agencée à une distance verticale de la surface supérieure (6) du panneau de verre et du support, et
- un dispositif de coupe (2) selon l'une quelconque des revendications 1 à 8, dans lequel le système de positionnement (8) du dispositif de coupe est agencé sur la partie de positionnement s'étendant horizontalement.

9. Table de coupe selon la revendication 8, dans laquelle des moyens de balayage sont prévus de manière adjacente à la tête de coupe sur le pont de positionnement (8) .

10. Procédé de coupe d'un panneau de verre (4) à l'aide d'une table de coupe (3) selon la revendication 8 ou 9, comprenant les étapes suivantes :
a) positionner le panneau de verre sur le support (5) de manière horizontale, de sorte qu'il s'étende dans un plan horizontal, le panneau de verre ayant une épaisseur t, et une surface supérieure (6) et inférieure (7), dans lequel la surface inférieure est supportée par une surface de support du support,
b) lors d'une vue de dessus, déplacer la tête de coupe (1) vers une position à l'extérieur d'un bord circonférentiel du panneau de verre,
c) utiliser les moyens d'actionnement (10) pour déplacer la tête de coupe vers la surface de support le long de l'axe d'actionnement sur une première distance d'actionnement jusqu'à ce que les moyens de coupe (12) ou la roue de sécurité (15) soit en contact avec la surface de support dans une première position de contact le long de l'axe d'actionnement (11),
d) enregistrer la première position de contact dans une mémoire,
e) utiliser les moyens d'actionnement (10) pour écarter la tête de coupe de la surface de support le long de l'axe d'actionnement,
f) lors d'une vue de dessus, déplacer la tête de coupe vers une position sur le panneau de verre,
g) utiliser les moyens d'actionnement (10) pour déplacer la tête de coupe vers la surface supérieure le long de l'axe d'actionnement sur une deuxième distance d'actionnement jusqu'à ce que les moyens de coupe ou la roue de sécurité soit en contact avec la surface supérieure dans une deuxième position de contact le long de l'axe d'actionnement,
h) enregistrer la deuxième position de contact dans une mémoire,
i) calculer l'épaisseur t du panneau de verre par obtention de la différence entre la deuxième position de contact et la première position de contact le long de l'axe d'actionnement.

11. Procédé selon la revendication 10, comprenant l'étape suivante :
- utiliser soit la première soit la deuxième tête de coupe pour effectuer la coupe, dans lequel la sélection de la première ou de la deuxième tête de coupe est basée sur leur aptitude respective à effectuer une coupe dans un panneau de verre avec l'épaisseur calculée t.

12. Procédé selon la revendication 11, dans lequel une table contenant des données empiriques est fournie pour la sélection de la tête de coupe la plus appropriée pour l'épaisseur calculée t.
